# EUROPEAN PATENT APPLICATION

(11) **EP 4 589 267 A1**
(43) Date of publication of application: **23.07.2025**
(21) Application number: 25151466.7
(22) Date of filing: 13.01.2025
(51) Int. Cl.: G01G 19/393

(54) **COMBINATION WEIGHING APPARATUS**

(30) Priority: 19.01.2024 JP 2024007001
(71) Applicant: Ishida Co., Ltd., Kyoto-shi Kyoto 606-8392 (JP)
(72) Inventor: MIYAMOTO, Hideshi, Ritto-shi, Shiga, 520-3026 (JP)
(74) Representative: Gill Jennings & Every LLP

(57) **Abstract**

A combination weighing apparatus (100) includes: a distribution unit (11) that distributes articles; a plurality of conveyance units (21) that convey the articles discharged from the distribution unit (11) in a direction away from the distribution unit (11) with a plurality of troughs; an imaging unit (60) that images the conveyance units (21); an image processing unit (101) that specifies a portion where an article remains of the conveyance units (21) on a basis of an image of the conveyance units (21) imaged by the imaging unit (60); and a controller (102) that drives and controls the distribution unit (11) and the conveyance units (21), wherein the controller (102) drives a conveyance unit (21) out of the conveyance units '21) which corresponds to the portion specified by the image processing unit (101) until the conveyance unit (21) becomes free from the article in a mode of discharging articles remaining in the combination weighing apparatus (1) in a state where supply of new articles to the distribution unit (21) is cut off.

## Description

### TECHNICAL FIELD

The present invention relates to a combination weighing apparatus.

### BACKGROUND ART

Conventionally, a combination weighing apparatus has an all-discharge mode in which articles remaining in the combination weighing apparatus are discharged.

In such an all-discharge mode, some types of the combination weighing apparatus drive conveyance units for supplying the articles to hoppers while opening all gates of the hoppers in a state where supply of new articles to the combination weighing apparatus is cut off in order to discharge the remaining articles in a short time, whereas the other types of the combination weighing apparatus discharge the remaining articles while combination weighing is performed.

However, in the case of articles that are likely to stagnate in the article conveyance units including a distribution unit, such as sticky broilers, the articles are sometimes not discharged even when the conveyance units are driven for a longer time than usual. Therefore, there is a problem that the combination weighing apparatus cannot be stopped without visually confirming whether or not the articles have been discharged.

Therefore, in order to solve such a problem, a technique for determining an article stagnation region on troughs constituting the conveyance units is known (see, for example, JP 2013-250143 A).

### SUMMARY OF THE INVENTION

However, such a technique merely achieves the determination of the article stagnation region, and it is still not possible to finish the discharge from the combination weighing apparatus in a short time to shorten the set-up change time or the time for processes associated with the production completion.

The present invention has been made in view of the above problems, and an object of the present invention is to provide a combination weighing apparatus capable of finishing a discharge of articles remaining in the apparatus in a short time.

A combination weighing apparatus according to an embodiment is summarized as including: a distribution unit that distributes articles; a plurality of conveyance units that convey the articles discharged from the distribution unit in a direction away from the distribution unit with a plurality of troughs; an imaging unit that images the conveyance units; an image processing unit that specifies a portion where an article remains of the conveyance units on a basis of an image of the conveyance units imaged by the imaging unit; and a controller that drives and controls the distribution unit and the conveyance units, wherein the controller drives a conveyance unit out of the conveyance units which corresponds to the portion specified by the image processing unit until the conveyance unit becomes free from the article in a mode of discharging articles remaining in the combination weighing apparatus in a state where supply of new articles to the distribution unit is cut off.

According to the present invention, it is possible to provide a combination weighing apparatus capable of finishing the discharge of articles remaining in the apparatus in a short time, since only a conveyance unit in which an article remains is driven until the article is discharged.

In addition, according to the present invention, it is possible to provide a combination weighing apparatus that can contribute to reduction in power consumption, since conveyance units in which no article remains are not driven.

### BRIEF DESCRIPTION OF THE DRAWINGS

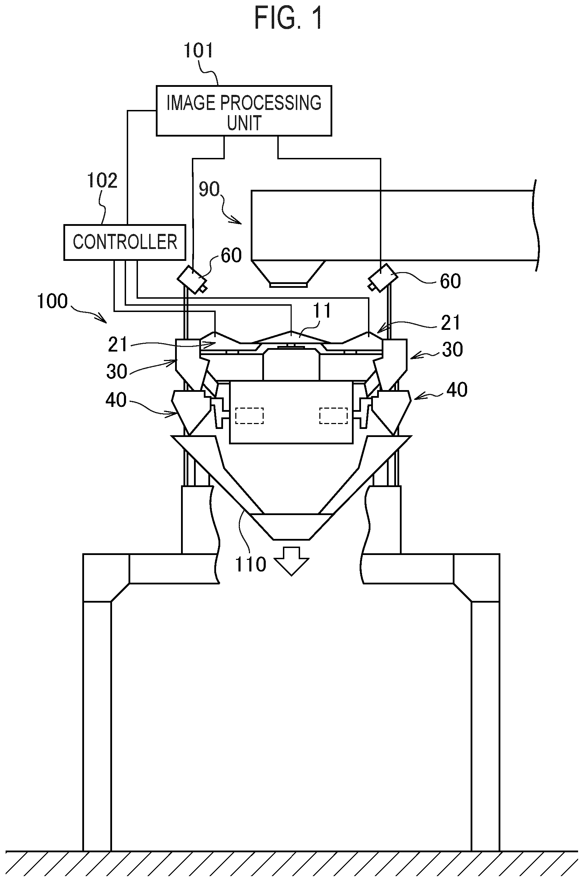

FIG. 1 is a diagram for describing an example of an overall configuration of a combination weighing apparatus according to an embodiment.

### DESCRIPTION OF EMBODIMENTS

Hereinafter, the present embodiment will be described in detail with reference to the attached drawings. In the following description of the drawings, the same or similar parts are denoted by the same or similar reference symbols. However, note that the drawings are schematic, and ratios of dimensions are different from actual ones. Therefore, specific dimensions and the like are determined in consideration of the following description. Moreover, there may be portions where dimensional relationships or proportions are different among the drawings. In this specification and the drawings, elements having substantially the same function and configuration are denoted by the same reference numerals to omit redundant description, and elements not directly related to the present invention are omitted.

### (First Embodiment)

Hereinafter, a combination weighing apparatus 100 according to a first embodiment of the present invention will be described with reference to FIG. 1. FIG. 1 is a diagram for describing an example of an overall configuration of the combination weighing apparatus 100 according to the first embodiment.

As illustrated in FIG. 1, the combination weighing apparatus 100 according to the present embodiment includes a distribution table 11, a plurality of conveyance units 21, a plurality of pool hoppers 30, weighing hoppers 40, a collective discharge chute 110, an imaging unit 60, an image processing unit 101, and a controller 102.

The distribution table 11 constitutes a distribution unit that distributes articles supplied from an external apparatus 90. For example, the distribution table 11 may distribute and discharge the articles supplied from the external apparatus 90 to the conveyance units 21 by subjecting the articles to vibration or rotation in the horizontal plane.

Here, the article in the present embodiment is assumed to be a breast or a thigh of a broiler that is sticky and absorbs vibration, meat blocks that tend to form a cluster when they stagnate, snacks similar thereto, or the like, but the present embodiment can be applied to other articles without limitation.

The conveyance units 21 convey articles discharged from the distribution table 11 in a direction away from the distribution table 11 with a plurality of troughs. As illustrated in FIG. 1, the conveyance units 21 are disposed substantially circumferentially below and around the distribution table 11. Furthermore, the conveyance unit 21 each may be a supply feeder the trough of which is vibrated by an electromagnetic vibrator, or a belt conveyor.

The plurality of pool hoppers 30 is provided corresponding to the plurality of conveyance units 21, and receives and stores articles supplied from the plurality of conveyance units 21. When the weighing hopper 40 becomes empty, the pool hopper 30 opens and closes its own gate to discharge an article to the weighing hopper 40. Here, in a case where the pool hoppers 30 are not provided, articles are supplied from the plurality of conveyance units 21 to the plurality of weighing hoppers 40.

The imaging unit 60 images the conveyance units 21, and may also image the distribution table 11. Note that one or a plurality of imaging units 60 may be provided. For example, two imaging units 60 may complement each other to image all the conveyance units 21 and the distribution table 11. Furthermore, a plurality of imaging units 60 may be provided corresponding to the plurality of conveyance units 21.

The image processing unit 101 specifies a portion where an article remains of the conveyance unit 21 on the basis of an image of the conveyance units 21 imaged by the imaging unit 60.

The controller 102 drives and controls the distribution table 11 and the conveyance units 21. Specifically, in a mode in which an article remaining in the combination weighing apparatus 100 is discharged in a state where the supply of new articles to the distribution table 11 is cut off (so-called all-discharge mode), the controller 102 drives the conveyance unit 21 corresponding to the portion specified by the image processing unit 101 until the conveyance unit 21 becomes free from the article.

In the all-discharge mode, since the gates of all the hoppers (the pool hoppers 30 and the weighing hoppers 40) are opened, the articles supplied from the conveyance units 21 to the pool hoppers 30 pass through the weighing hoppers 40 and the collective discharge chute 110 and fall to the outside. Here, in the all-discharge mode, the gates of all the hoppers may be opened simultaneously or in a predetermined order by group.

Furthermore, the imaging unit 60 may be configured to image not only the conveyance units 21 but also the distribution table 11.

In particular, in a case where the distribution table 11 rotates in the horizontal plane, the image processing unit 101 may specify an article remaining in the distribution table 11 on the basis of the image of the distribution table 11 imaged by the imaging unit 60, and the controller 102 may drive the distribution table 11 until the distribution table 11 becomes free from the article specified by the image processing unit 101 in the all-discharge mode.

According to such a configuration, the article stagnating in the distribution table 11 can be reliably discharged to the conveyance unit 21 in the all-discharge mode.

Note that the controller 102 may specify the article remaining in the distribution table 11 on the basis of the weight of the article on the distribution table 11 loaded on a load cell supporting the distribution table 11 instead of the imaged image of the distribution table 11 described above.

Furthermore, the controller 102 may drive the conveyance unit 21 corresponding to the specified portion at a predetermined maximum conveyance rate in the all-discharge mode. That is, in a case where the conveyance unit 21 is a supply feeder the trough of which is vibrated, such driving includes maximizing the vibration intensity (amplitude). According to such a configuration, the distribution table 11 quickly becomes free from the article in the all-discharge mode.

In addition, the distribution table 11 may transfer articles from the distribution table 11 to the conveyance units 21 by rotating in a horizontal plane. When the conveyance unit 21 is clogged with an article, articles may remain also in the distribution table 11. In such a case, the rotation of the distribution table 11 allows the articles remaining in the distribution table 11 to be sent out to the conveyance units 21 which are not clogged with an article, so that the clogging with the articles is resolved in an early stage.

In addition, the controller 102 does not need to drive the other conveyance units 21 than that corresponding to the portion specified by the image processing unit 101 in the all-discharge mode. According to such a configuration, it is possible to contribute to reduction in power consumption by leaving the other conveyance units 21 undriven in which an article is not specified.

Note that the controller 102 may be configured to output a warning signal to a predetermined operation screen to indicate that the article should be removed from the conveyance unit 21 specified by the image processing unit 101 in a case where no change is observed in the article on the specified conveyance unit 21 even after the conveyance unit 21 in which the article remains is driven for a predetermined time in the above-described all-discharge mode.

According to the present embodiment, since the distribution table 11 and the conveyance unit 21 corresponding to the portion specified by the image processing unit 101 as a portion where an article remains are driven to discharge articles, it is possible to shorten the set-up change time and shorten the time for processes associated with the production completion.

In addition, according to the present embodiment, since the time during which the gates of the hoppers are fully opened in the all-discharge mode can be minimized, it is possible to contribute to reduction in power consumption.

Although the present invention is explained in detail using the above-mentioned embodiments, it will be apparent to those skilled in the art that the present invention is not limited to the embodiments described herein. The present invention can be implemented as modifications and changes without departing from the spirit and scope of the present invention defined by the description of the claims. Accordingly, the description of the present specification is for the purpose of illustration and is not intended to limit the present invention in any way.

### REFERENCE SIGNS LIST

- 100: Combination weighing apparatus
- 11: Distribution table
- 21: Conveyance unit
- 30: Pool hopper
- 60: Imaging unit
- 90: External apparatus
- 101: Image processing unit
- 102: Controller

## Claims

1. A combination weighing apparatus comprising:
a distribution unit that distributes articles;
a plurality of conveyance units that convey the articles discharged from the distribution unit in a direction away from the distribution unit with a plurality of troughs;
an imaging unit that images the conveyance units;
an image processing unit that specifies a portion where an article remains of the conveyance units on a basis of an image of the conveyance units imaged by the imaging unit; and
a controller that drives and controls the distribution unit and the conveyance units, wherein
the controller drives a conveyance unit out of the conveyance units which corresponds to the portion specified by the image processing unit until the conveyance unit becomes free from the article in a mode of discharging articles remaining in the combination weighing apparatus in a state where supply of new articles to the distribution unit is cut off.

2. The combination weighing apparatus according to claim 1, wherein
the imaging unit images the distribution unit, and
the image processing unit specifies an article remaining in the distribution unit on a basis of an image of the distribution unit imaged by the imaging unit, and
in the mode, the controller drives the distribution unit until the distribution unit becomes free from the article specified by the image processing unit.

3. The combination weighing apparatus according to claim 1 or 2, wherein
in the mode, the controller drives the conveyance unit which corresponds to the specified portion with a predetermined maximum conveyance rate.

4. The combination weighing apparatus according to claim 1, 2 or 3, wherein
the distribution unit transfers the articles from the distribution unit to the conveyance units by rotating in a horizontal plane.

5. The combination weighing apparatus according to any of the preceding claims , wherein
in the mode, the controller does not drive other conveyance units than the specified conveyance unit which corresponds to the specified portion.
